# EUROPEAN PATENT SPECIFICATION

(11) **EP 4 261 161 B1**
(45) Date of publication and mention of the grant of the patent: **26.02.2025**
(21) Application number: 23166762.7
(22) Date of filing: 05.04.2023
(51) Int. Cl.: B65G 47/24, B07C 5/36, A23N 4/00, B65B 25/04, B65B 35/58

(54) **OBJECT ROTATING SYSTEM**
OBJEKTROTATIONSSYSTEM
SYSTÈME DE ROTATION D'OBJET

(30) Priority: 11.04.2022 ES 202230326
(43) Date of publication of application: 18.10.2023
(73) Proprietor: Ingenieria Plana Alta, S.A., 12004 Castellón (ES)
(72) Inventor: BERNAT VILAR, Vicente, 12550 Almazora (Castellón) (ES)
(74) Representative: Ungria López, Javier

(56) References cited:
- WO-A1-2006/062401
- NL-C2- 2 002 866

## Description

### Object of the invention

The present invention relates to a rotating system for objects, preferably spherical objects, which has been designed to orient said objects, positioning them in a specific position.

The invention is applicable to any sector in which placing an object with a specific orientation is required; more particularly, it is applicable to orient pieces of fruit that are arranged in order in containers for storage, transport and sale, such as, for example, to place pieces of fruit in the container with the stem upwards.

### Background of the invention

In the state of the art, patent document US 6691854 can be mentioned which describes a device for orienting fruit, comprising a conveyor holder with holders for the fruit; it lifts synchronously co-movable with the holders and can rotate relative to them to remove the fruits from the holders and rotate the fruit towards a detector, such as a camera, to detect the position of each fruit. A control device for the lifts is connected to the detector and activates the lifts for a relevant object as long as required to rotate each individual fruit. This configuration requires a lifting device by means of which the fruit is rotated, which complicates its configuration.

In patent document EP 2167408, a vision system for analysing images of rotating fruit that is transported is used. This information on the orientation and position of the fruit can subsequently be used for handling the fruit, for example, by means of a robot that packages fruit in a desired position and orientation. Consequently, the use of a robot is required, which makes implementing the functionality that allows the fruit to be packaged with a desired orientation considerably more expensive.

The invention provides a rotating system designed to orient objects in order to position them based on a reference mark or element included on its surface, such as, for example, is required in the packaging of fruit that are arranged in order in transport and sale containers, wherein they are positioned, for example, with the stem upwards, for aesthetics and/or to avoid damage or marks among the fruit, which provides a simplified configuration for rotating different sizes of objects (for example different sizes of fruit) and which also facilitates the placement of the object in the required position.

Document WO2006062401A1 relates to a device for orienting a substantially spherical object having an external configuration suitable for said orientation, the device comprising a frame, at least three drivable rotation members arranged in the frame, drive means for driving the rotation members, and an orientation determining system for determining the orientation of the spherical object.

### Description of the invention

In order to achieve the objectives and solve the aforementioned problems, the invention consists of a rotating system for objects, preferably spheroidal objects, which presents as its main novelty the incorporation of a module that is equipped with at least three individual belts, arranged inclined and converging towards the central point of the module, forming an accommodating cavity for an object, wherein each individual belt is individually movable through feed/return means by the operation of individual drive means.

Preferably, three individual belts will be used, so that contact of the object simultaneously with the three belts is ensured even for slightly spherical and highly deformed objects, that being the minimum number of belts to rotate the object in enough directions to place it in any position. However, the number of individual belts may vary depending on the needs and the characteristics of the spheroidal object.

Furthermore, the system comprises computer vision and control means, configured to capture and process the image of an object, located in the cavity, and operate the individual drive means to place the object in the required position by governing the individual forward/reverse movement of the three belts.

The described configuration has the advantage that the inclined arrangement of the at least three individual belts allows different sizes of objects to be received at the same time that it facilitates their reception and accommodation in the cavity.

In the preferred embodiment, the computer vision and control means are configured to govern the forward/reverse movement of the individual belts by means of interpolation of successive approximations of the forward/reverse movements of each of said belts individually. This makes it possible to obtain the correct positioning of the objects by compensating for the sliding of the object on the belts by means of successive approximations, due to mathematical-geometric behaviour of the belt-object system.

Furthermore, in the preferred embodiment of the invention, the individual belts form a 45-degree angle relative to a plane that contains them, and consequently they form a 90-degree angle between them, a configuration that facilitates the reception and accommodation of the objects in the cavity formed. Obviously, these angles may vary depending on the needs of the object to be rotated.

Each of the individual belts comprises sub-belts with different lengths: a central sub-belt and one or more lateral sub-belts.

In one embodiment, it comprises a central sub-belt and a lateral sub-belt on each side of the central sub-belt, such that the central sub-belt is longer than the lateral belts, forming the aforementioned bowl-like cavity.

It has also been envisaged that it may comprise a plurality of lateral sub-belts on each side of the central belt, which lengths decrease towards the sides.

Therefore, there is a central sub-belt that penetrates down the cavity to a greater extent and one or more sub-belts on each side of the central sub-belt that penetrate down the cavity to a lesser extent, as they are located further away from the central sub-belt, so that the lateral sub-belts are arranged recessed in the bottom area, providing a closed bowl that prevents small and large objects from escaping from the space delimited by the cavity formed.

It has been envisaged that the module is configured in such a way that it can rotate around itself by rotating the plane, in which the at least three bands are arranged, along a perpendicular axis.

In the preferred embodiment of the invention, the system is applied to a fruit packaging machine equipped with a suction cup mechanism that is able to rotate in the horizontal plane to provide one more possibility of rotation in the event that it is appropriate to rotate the fruit in said horizontal plane.

### Description of the figures

To complete the description, and for the purpose of helping to make the features of the invention more readily understandable, this description is accompanied by a set of figures constituting an integral part of the same, which by way of illustration and not limitation represents the following:

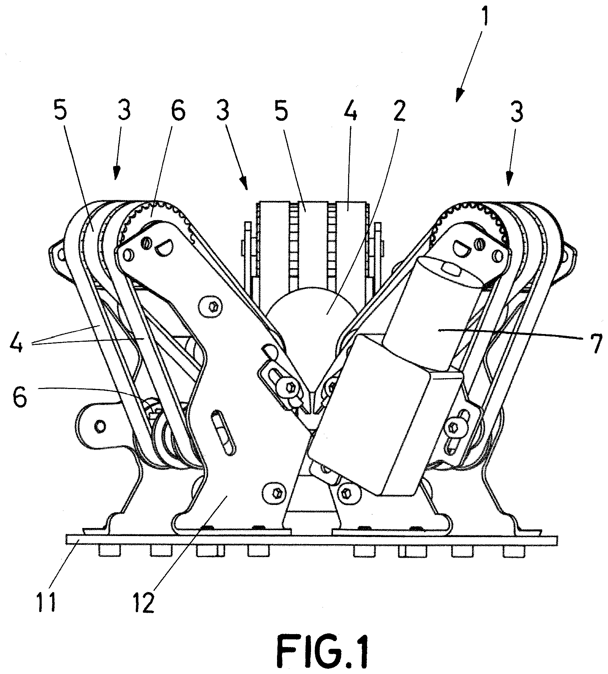

Figure 1 shows an elevation view of an exemplary embodiment of the invention.
Figure 2 shows a plan view of the example of the previous figure.
Figure 3 shows a cross-section of the example of the previous figures, in which different sizes of a spheroidal object during the placement process have been represented in dashed lines.
Figure 4 shows a perspective view of the example of the previous figures.
Figure 5 shows a plan view of a possible example of applying the invention to a fruit packaging machine.
Figure 6 shows a side view of the previous figure.

### Preferred embodiment of the invention

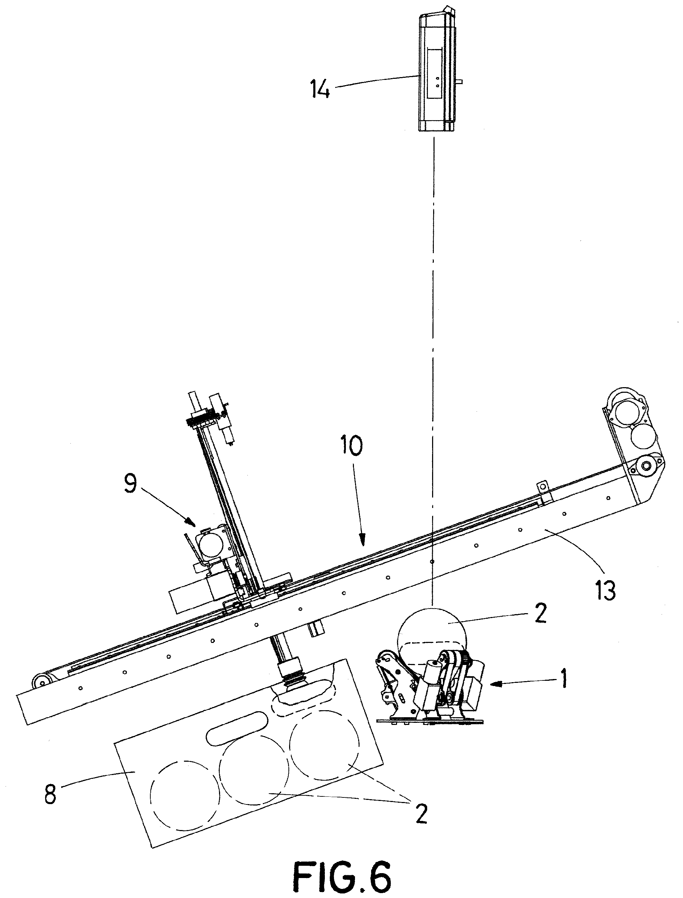

A description of the invention based on the aforementioned figures follows, which consists of a rotating system designed to orient objects (2), preferably spheroidal and/or spherical objects, in order to position them based on a reference mark or element included on its surface, such as, for example, is required in the packaging of fruit that are arranged in order in transport and sale containers (8), wherein they are positioned, for example, with the stem upwards, for aesthetics and/or to avoid damage or marks among the fruit, as shown in Figure 6.

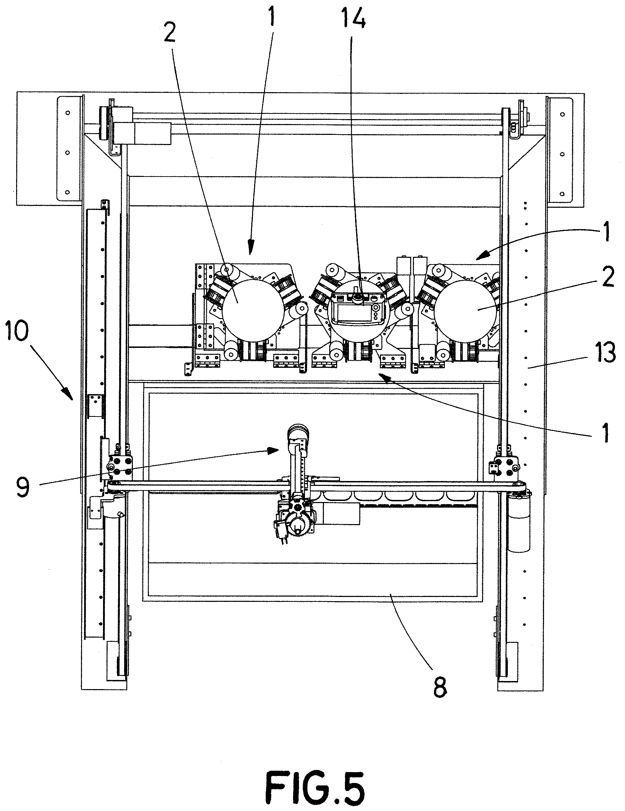

The system comprises a module (1) that can be assembled in different installations, such as, for example, in a packaging machine (10) as shown in Figures 5 and 6, as described below.

The module (1) is made up of at least three individual belts (3), arranged in one same plane (11) with a certain inclination converging towards the central point of the module (1), preferably at a 45-degree angle relative to the plane (11), so they are arranged forming a 90-degree angle between them.

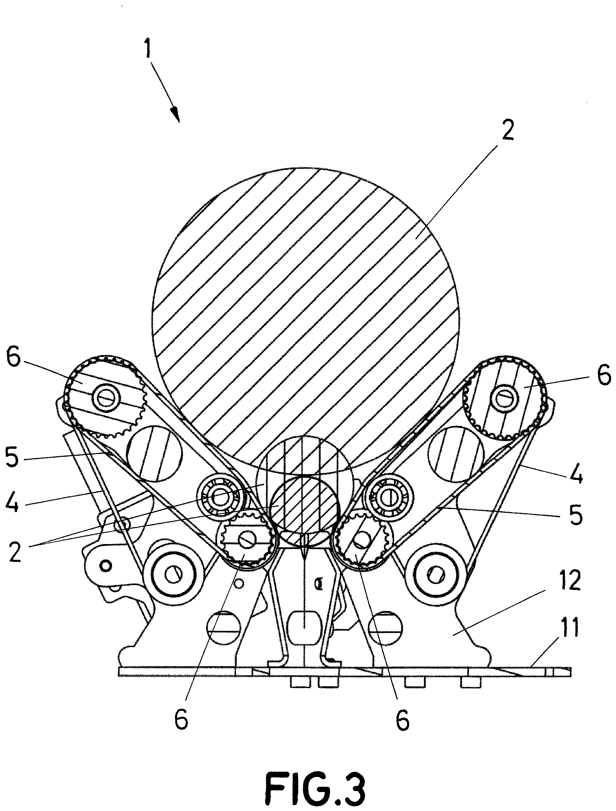

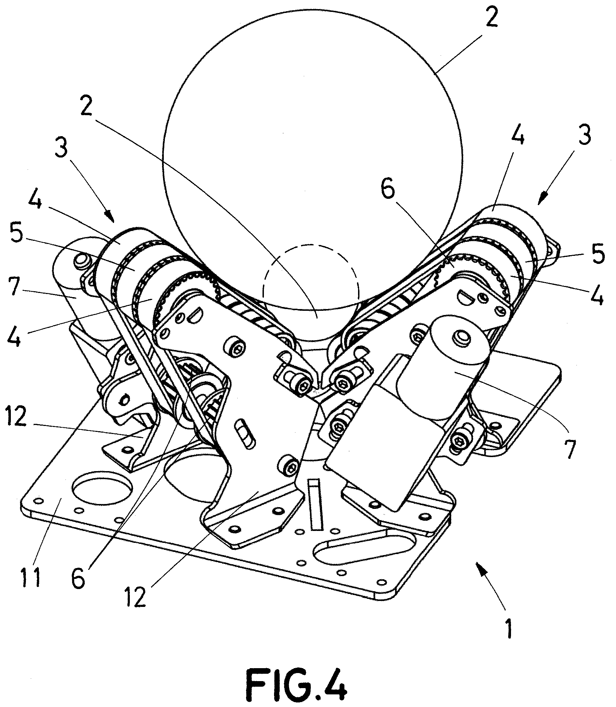

The individual belts (3) are formed by sub-belts (4, 5) with different lengths, which in the example comprise two lateral sub-belts (4) and one central sub-belt (5) longer than the previous ones, forming a bowl-like cavity, which makes it possible to hold objects (2) of different sizes, allowing objects of a smaller size or diameter to be accommodated at the bottom of the cavity, as shown in Figures 3 and 4.

In other embodiments (not shown), the number of lateral sub-belts (4) for each individual belt (3) varies, in which case it has been envisaged that their length is progressively shortened as they are arranged towards the sides, being located recessed in the bottom area of the cavity, with the central sub-belt being longer than the rest, to achieve the aforementioned functionality.

The sub-belts (4) and (5) are arranged on supports (12) on which drive means (7) are fastened, which simultaneously operate the sub-belts (4) and (5) through feed means (6), so that each of said individual belts (3) can be activated independently to rotate the object (2), depending on the position it has and the final position that it is to acquire, such as, for example, in the case of placing a piece of fruit with the stem upwards.

To do this, the system comprises computer vision and control means (14), configured to capture and process the image of an object located in the cavity, and to operate the individual belts (3) and position the body (2) in the required position, interpolating the forward or reverse movement of the individual belts (3) to achieve the desired rotation, so that at no time can it be seen that the object (2) rotates integrally with any of the three belts (3). Consequently, in order to place the reference point in the vertical of the object (2), various interpolations are made, so that the belts normally rotate at a faster speed than the object (2), which speed and/or direction of rotation changes several times per second. This adjustment creates a visual effect that gives the sensation that the object floats on the belts (3), since it is kept in contact with the three individual belts (3), obtaining the desired positioning by successive approximations of the movements of the three belts (3), governed by computer vision and control means that compensate for the sliding of the object on the belts due to mathematical-geometric behavior of the belt-object system.

The described configuration allows the objects to be kept inside the cavity, without them being able to bounce out of it, during the orientation process.

Figures 5 and 6 show an example of applying the system to a machine (10) for packaging fruit, which is equipped with an inclined frame (13) in which several of the modules (1) are arranged, on which a conveyor (not represented) allows the object (2) (spherical fruit) to fall, a position in which the computer vision and control means (14) act on the drive means (7) to place the piece of fruit with the stem upwards, as described, and later a suction cup mechanism (9) moves it from the corresponding module (1) to a container (8) in which the fruit is stored with the stem located vertically for its transport and sale. The purpose of the inclination of the frame (13) is for the container (8) to fill in a more regular and stable way when some pieces of fruit lean against others.

It has been envisaged that the suction cup mechanism (9) is able to rotate in the horizontal plane in the event that it is appropriate to rotate the fruit in said horizontal plane.

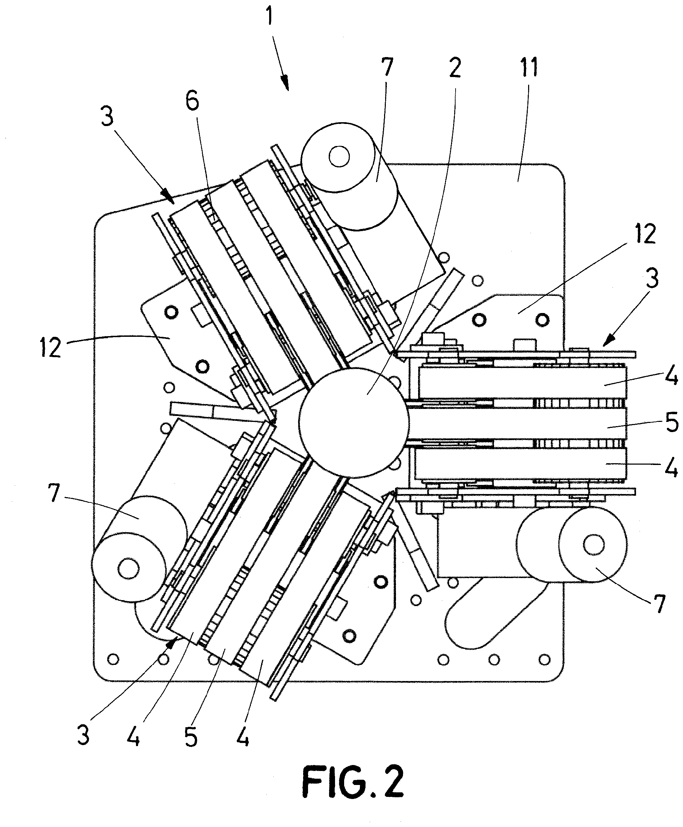

This ability to rotate can also be a characteristic of the modules (1) themselves, in other words, once the petiole of the fruit is positioned vertically; the entire module will rotate on itself, rotating the plane (11) on a perpendicular axis to provide one more degree of positioning, as shown in Figure 2.

## Claims

1. An object (2) rotating system, **characterised in that** it comprises:
- a module (1) that includes at least three individual belts (3), arranged inclined and converging towards the central point of the module (1), forming an accommodating cavity for an object (2), wherein each individual belt is individually movable through feed/return means (6) by the operation of individual drive means (7),
- computer vision and control means (14), configured to capture the image of an object (2), operate the individual drive means (7) and place the object (2) in the required position, governing the forward/reverse movement of the at least three individual belts (3).

2. The system, according to claim 1, wherein the computer vision and control means (14) are configured to govern the forward/reverse movement of the individual belts (3) by means of successive approximations of the forward/reverse movements of each of said belts.

3. The system, according to claim 1, wherein the individual belts (3) are fastened on a plane (11).

4. The system, according to claim 3, wherein the individual belts (3) form a 45-degree angle relative to the plane (11) that contains them.

5. The system, according to claim 1, wherein the individual belts (3) comprise sub-belts (4 and 5) with different lengths.

6. The system, according to claim 5, wherein each of the individual belts comprises a central sub-belt (5) and a lateral sub-belt (4), on each side of the central sub-belt, wherein the central sub-belt is longer than the lateral belts.

7. The system, according to claim 6, comprising a plurality of lateral sub-belts (4) on each side of the central belt (5), whose lengths decrease towards the sides.

8. The system, according to claim 3, wherein the module (1) is configured to rotate around itself, along an axis perpendicular to the plane (11).

9. The system, according to any one of the preceding claims, wherein the object (2) is a spherical object.

10. The system, according to claim 9, which is applied to a fruit packaging machine (10) equipped with a suction cup mechanism (9) that is able to rotate in the horizontal plane.

## Patentansprüche

1. System zum Drehen eines Objekts (2), **dadurch gekennzeichnet, dass** es umfasst:
- ein Modul (1), umfassend wenigstens drei einzelne Bänder (3), geneigt und zum Mittelpunkt des Moduls (1) hin konvergierend angeordnet sind, einen Aufnahmehohlraum für ein Objekt (2) bildend, wobei jedes einzelne Band einzeln durch Vorschub-/Rücklaufmittel (6) durch die Betätigung einzelner Antriebsmittel (7) bewegbar ist,
- Computer-Seh- und Steuermittel (14), ausgebildet zum Erfassen des Bildes eines Objekts (2), Betätigen der einzelnen Antriebsmittel (7), Anordnen des Objekts (2) in der gewünschten Position und Steuern der Vorwärts-/Rückwärtsbewegung der wenigstens drei einzelnen Bänder (3).

2. System nach Anspruch 1, wobei die Computer-Seh- und -Steuermittel (14) zum Steuern der Vorwärts-/Rückwärtsbewegung der einzelnen Bänder (3) durch aufeinander folgende Annäherungen der Vorwärts-/Rückwärtsbewegungen von jedem der Bänder ausgebildet sind.

3. System nach Anspruch 1, wobei die einzelnen Bänder (3) auf einer Ebene (11) befestigt sind.

4. System nach Anspruch 3, wobei die einzelnen Bänder (3) einen 45-Grad-Winkel relativ zu der Ebene (11) bilden, in der sie liegen.

5. System nach Anspruch 1, wobei die einzelnen Bänder (3) Teilbänder (4 und 5) mit unterschiedlichen Längen umfassen.

6. System nach Anspruch 5, wobei jedes der einzelnen Bänder ein mittleres Teilband (5) und ein seitliches Teilband (4) auf jeder Seite des mittleren Teilbands umfasst, wobei das mittlere Teilband länger ist als die seitlichen Bänder.

7. System nach Anspruch 6, umfassend eine Vielzahl von seitlichen Teilbändern (4) auf jeder Seite des mittleren Bandes (5), deren Längen zu den Seiten hin abnehmen.

8. System nach Anspruch 3, wobei das Modul (1) zum Drehen um sich selbst entlang einer Achse senkrecht zur Ebene (11) ausgebildet ist.

9. System nach einem der vorhergehenden Ansprüche, wobei das Objekt (2) ein kugelförmiges Objekt ist.

10. System nach Anspruch 9, das auf eine Obstverpackungsmaschine (10), ausgestattet mit einem Saugnapfmechanismus (9), der sich in der horizontalen Ebene drehen kann, angewendet wird.

## Revendications

1. Système de rotation d'objet (2), **caractérisé en ce qu'**il comprend :
- un module (1) qui comprend au moins trois courroies (3) individuelles, agencées inclinées et convergeant vers le point central du module (1), formant une cavité de logement pour un objet (2), dans lequel chaque courroie individuelle est individuellement mobile par le biais de moyens d'alimentation/de retour (6) grâce au fonctionnement de moyens d'entraînement (7) individuels,
- des moyens de vision et de commande informatiques (14) configurés pour prendre l'image d'un objet (2), actionner les moyens d'entraînement (7) individuels et placer l'objet (2) dans la position requise, régissant le mouvement avant/arrière des au moins trois courroies (3) individuelles.

2. Système selon la revendication 1, dans lequel les moyens de vision et de commande informatiques (14) sont configurés pour régir le mouvement avant/arrière des courroies (3) individuelles au moyen d'approximations successives des mouvements avant/arrière de chacune desdites courroies.

3. Système selon la revendication 1, dans lequel les courroies (3) individuelles sont fixées sur un plan (11).

4. Système selon la revendication 3, dans lequel les courroies (3) individuelles forment un angle de 45 degrés par rapport au plan (11) qui les contient.

5. Système selon la revendication 1, dans lequel les courroies (3) individuelles comprennent des sous-courroies (4 et 5) avec des longueurs différentes.

6. Système selon la revendication 5, dans lequel chacune des courroies individuelles comprend une sous-courroie centrale (5) et une sous-courroie latérale (4), de chaque côté de la sous-courroie centrale, dans lequel la sous-courroie centrale est plus longue que les courroies latérales.

7. Système selon la revendication 6, comprenant une pluralité de sous-courroies latérales (4) de chaque côté de la courroie centrale (5), dont les longueurs diminuent vers les côtés.

8. Système selon la revendication 3, dans lequel le module (1) est configuré pour tourner autour de lui-même, le long d'un axe perpendiculaire au plan (11).

9. Système selon l'une quelconque des revendications précédentes, dans lequel l'objet (2) est un objet sphérique.

10. Système selon la revendication 9, qui est appliqué sur une machine d'emballage de fruits (10) équipée d'un mécanisme à ventouse (9) qui peut tourner dans le plan horizontal.
